# EUROPÄISCHE PATENTSCHRIFT

(11) **EP 1 516 119 B1**
(45) Veröffentlichungstag und Bekanntmachung des Hinweises auf die Patenterteilung: **01.05.2013**
(21) Anmeldenummer: 03735446.1
(22) Anmeldetag: 23.05.2003
(51) Int. Cl.: F03D 1/00

(54) **VERFAHREN ZUR MONTAGE/DEMONTAGE VON KOMPONENTEN EINER WINDENERGIEANLAGE**
METHOD FOR ASSEMBLING/DISMOUNTING COMPONENTS OF A WIND POWER PLANT
PROCEDE DE MONTAGE/DEMONTAGE D'ELEMENTS CONSTITUTIFS D'UNE EOLIENNE

(30) Priorität: 01.06.2002 DE 10224439
(43) Veröffentlichungstag der Anmeldung: 23.03.2005
(73) Patentinhaber: Wobben Properties GmbH, 26605 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2003/005401
(87) Internationale Veröffentlichungsnummer: WO 2003/102409

(56) Entgegenhaltungen:
- EP-A- 1 101 934
- EP-A- 1 101 936
- WO-A-96/10130

## Beschreibung

Die vorliegende Erfindung betrifft eine Windenergieanlage sowie ein Verfahren zur Montage/Demontage von Komponenten einer Windenergieanlage.

Windenergieanlagen sind seit geraumer Zeit bekannt. Durch die beträchtlichen Abmessungen und Gewichte moderner Anlagen müssen einerseits Komponenten einzeln zur Baustelle transportiert werden. Dort werden die Komponenten dann zusammengebaut. Dabei müssen inzwischen durchaus Lasten von 50 Tonnen und mehr gehoben werden.

Andererseits müssen Lasten auch in beträchtliche Höhe von über 100 Metern gehoben werden. Zwar sind Winden in Windenergieanlagen und insbesondere dort in den Gondeln bekannt, jedoch befinden sich diese Winden meistens im hinteren Teil der Gondel der Windenergieanlage.

Weiterhin ist aus der WO 96/10130 eine Lasthebevorrichtung an einer Windenergieanlage bekannt. Bei dieser bekannten Lasthebevorrichtung ist auf einem Maschinenrahmen eine Winde angeordnet. Von der Winde aus verläuft ein Zugseil über ein verschwenkbares Gestänge. Eine solche Lasthebevorrichtung ist an jeder Windenergieanlage vorgesehen. Dabei ist die Größe der an jeder Windenergieanlage vorgesehene Lasthebevorrichtung abhängig von der erforderlichen Tragfähigkeit und steigt daher mit der Größe der Windenergieanlage bzw. mit dem Gewicht von deren Komponenten an.

Alternativ sind Hebevorgänge natürlich unter Verwendung entsprechend großer und tragfähiger Kräne möglich, die wiederum nur mit hohem Aufwand bereit gestellt werden können Da auch der Aufwand zum Verfahren eines solchen Krans, also Abrüsten, Verfahren und erneut Aufrüsten, beträchtlich ist, bleibt der Kran in der Regel bei einer Windenergieanlage, bis deren Aufbau so weit fortgeschritten ist, dass der Kran dort nicht mehr benötigt wird. Erst dann wird der Kran zu der nächsten Baustelle transportiert. Dabei spielt die Entfernung zwischen diesen Baustellen eine untergeordnete Rolle, denn die zum Verlegen eines Krans erforderlichen Arbeitsgänge müssen stets ausgeführt werden, gleichgültig ob er lediglich um einige hundert Meter oder um einige hundert Kilometer verlegt wird.

Natürlich erfordert auch der Austausch von Komponenten einer Windenergieanlage, wie z. B. der Rotorblätter, einen Kran, der entsprechend aufwändig transportiert werden muss.

Weitere Hebevorgänge nach dem Stand der Technik sind aus NL 1014553, US 3,829,064 bzw. JP 6135692 bekannt.

Aufgabe der vorliegenden Erfindung ist es daher, ein Verfahren und eine Windenergieanlage der eingangs genannten Art derart weiterzubilden, dass ein Kran bei der Montage/Demontage von Komponenten einer Windenergieanlage in geringerem Umfang gebunden ist.

Diese Aufgabe wird bei einer Windenergieanlage mit einem Fahrzeug gemäβ Anspruch 1 durch wenigstens eine Umlenkrolle und wenigstens eine Seildurchführung im Bereich des Turmkopfes zum Durchführen eines Zugseiles von einer Winde gelöst. Weiterhin wird die Aufgabe gelöst durch ein Verfahren zur Montage/Demontage von Komponenten einer Windenergieanlage gemäß Anspruch 4, mit den Schritten:
- Verlegen eines Zugseiles von der Winde zu wenigstens einer Umlenkrolle im Bereich Turmkopfes und weiter zu der montierenden/demontierenden Komponente,
- Anbringen des Zugseils an der Komponente, und
- Lösen und Herunterlassen bzw. Hochziehen und Befestigen der Komponente.

Dabei liegt der Erfindung die Erkenntnis zu Grunde, dass wenigstens ein Teil der Komponenten einer Windenergieanlage auch ohne Hilfe eines Kranes montiert bzw. ausgetauscht werden kann, wenn eine geeignete Hebeeinrichtung zur Verfügung steht. Durch die erfindungsgemäße Lösung werden aufwändige Zusatzinstallationen an jeder Windenergieanlage vermieden. Trotzdem ist eine vielseitige Hebeeinrichtung mit geringem Aufwand schnell verfügbar.

Dadurch ist die im hinteren Teil der Gondel bereits vorhandene Winde auch im vorderen Bereich der Gondel einsetzbar, ohne dass die Position der Winde innerhalb der Gondel verändert werden muss.

In einer bevorzugten Weiterbildung der Erfindung ist eine Seildurchführung in der Gondel zum Durchführen eines Zugseils von einer Winde am Fuß der Windenergieanlage vorgesehen. Dadurch kann eine ausreichend starke Winde mit einem ausreichend tragfähigen Zugseil zum Heben bzw. Absenken schwerer Komponenten eingesetzt werden, so dass auch solche Komponenten ohne die Verwendung eines Kranes montiert bzw. ausgetauscht werden können. Es ist demnach völlig ausreichend, die Winde zu der Windenergieanlage zu transportieren, deren Zugseil mit der in der Windenergieanlage vorhandenen Winde bis in die Gondel hochzuziehen, dort über die Umlenkrolle(n) zu legen und dann die entsprechenden Montagen/Demontagen vorzunehmen. Dabei ist der Aufwand zum Transport einer Winde natürlich erheblich geringer als der Aufwand zum Transport eines ausreichend leistungsfähigen und insbesondere ausreichend großen Krans.

Weitere vorteilhafte Ausführungsformen der Erfindung sind in den Unteransprüchen angegeben.

Im Folgenden wird die Erfindung anhand der Figuren näher erläutert. Dabei zeigen:
- Fig. 1: eine Windenergieanlage mit einer am Fuß des Turmes angeordneten Winde;
- Fig. 2: eine vereinfachte Querschnittsansicht der Gondel mit einer ersten Ausführungsform der Erfindung; und
- Fig. 3: eine vereinfachte Querschnittsansicht der Gondel mit einer zweiten Ausführungsform der Erfindung.

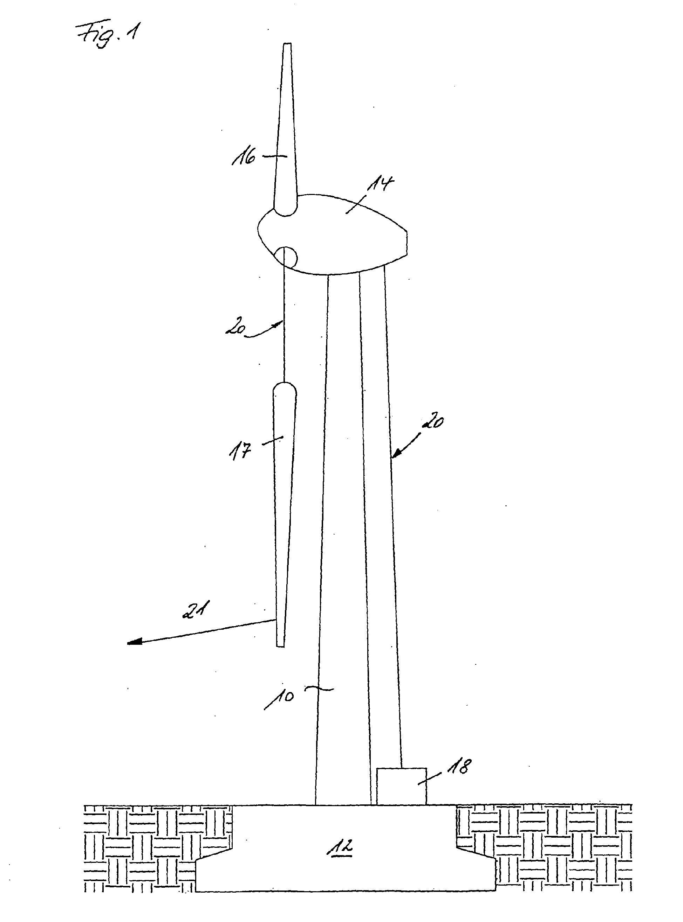

In Figur 1 ist ein Turm 10 einer Windenergieanlage auf einem Fundament 12 verankert. An der Spitze des Turmes 10 befindet sich eine Gondel 14, an welcher ein erstes Rotorblatt 16 befestigt ist.

Am Fuß des Turmes 10 ist eine Winde 18 ebenfalls auf dem Fundament 12 verankert. Von der Winde 18 verläuft ein Zugseil 20 an der Rückseite des Turmes 10 (für diese Betrachtung sind die Vorderseite und die Rückseite des Turmes 10 diejenigen Seiten, an denen sich die entsprechenden Abschnitte der Gondel 14 befinden) zu der Gondel 14, durchläuft die Gondel und tritt an einer für ein zweites Rotorblatt 17 vorgesehenen Montageöffnung wieder aus der Gondel 14 aus und verläuft nach unten zu dem Rotorblatt 17, das an diesem Zugseil befestigt ist und durch die Winde nach oben gezogen oder zum Boden hin herabgelassen wird. An dem zweiten Rotorblatt 17 ist ein Pfeil 21 dargestellt, der die Verwendung eines Führungsseiles 21 symbolisiert. Durch die Verwendung eines Führungsseiles 21 kann das Rotorblatt 17 in geeigneter Weise geführt werden, so dass es nicht unbeabsichtigt gegen den Turm 10 schlagen kann. Weiterhin kann durch ein solches Führungsseil 21 sichergestellt werden, dass dieses Rotorblatt 17 beim Herablassen nicht mit der Spitze auf dem Boden aufsetzt und beschädigt wird, sondern es kann in Richtung des Pfeiles gezogen und damit in eine horizontale Lage geführt werden.

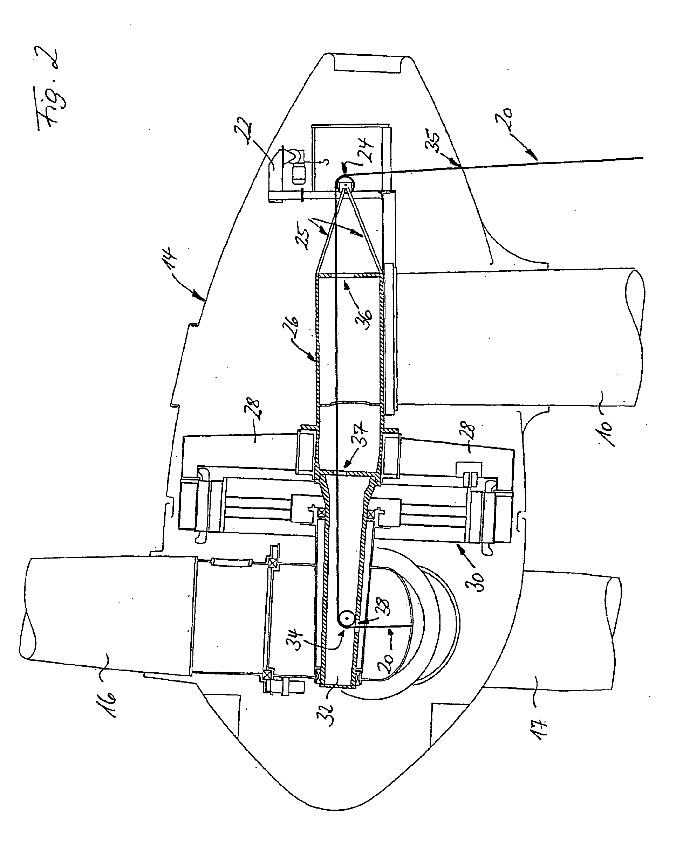

Figur 2 zeigt eine vereinfachte Querschnittsansicht der Gondel 14. In dieser Figur ist der Kopfabschnitt des Turmes 10 dargestellt. Auf diesem Kopfabschnitt des Turmes 10 liegt ein Maschinenträger 26, der den Statorträger 28 mit dem Stator 30 trägt. Weiterhin trägt der Maschinenträger 26 einen Achszapfen 32. Auf diesem Achszapfen 32 ist der Rotor mit den Rotorblättern 16, 17 und der Läufer 30 des Generators drehbar gelagert.

An der von dem Statorträger 28 abgewandten Seite des Maschinenträgers 26 befindet sich eine in den meisten Windenergieanlagen bereits standardmäßig vorgesehene Winde 22. Dort befinden sich auch Haltestäbe 25, an deren von dem Maschinenträger 26 abgewandten Ende eine erste Umlenkrolle 24 vorgesehen ist. Eine zweite Umlenkrolle 34 befindet sich innerhalb des Achszapfens 32. Weiterhin ist in der Figur das Zugseil 20 dargestellt, das an der Rückseite in die Gondel 14 eintritt. Dabei kann die Durchgangsöffnung für dieses Zugseil 20 auch eine unterhalb der Winde 22 im Boden der Gondel 14 ohnehin vorgesehene, verschließbare Öffnung sein.

Das Zugseil 20 verläuft nach dem Eintritt in die Gondel 14 über die erste Umlenkrolle 24 durch eine zweite Seildurchführung 36 (die erste Seildurchführung ist demnach die Öffnung im Boden der Gondel 14), durch eine dritte Seildurchführung 37 zu der Umlenkrolle 34 und von dort zu einer vierten Seildurchführung 38 in dem Achszapfen 32, z. B. zu dem zu bewegenden Rotorblatt 17.

Das Heraufholen des Zugseiles 20 bzw. dessen Herablassen auf dem Weg zwischen der Gondel 14 und der Winde 18 am Fundament 12 des Turmes 10 kann durch die Winde 22 unterstützt werden.

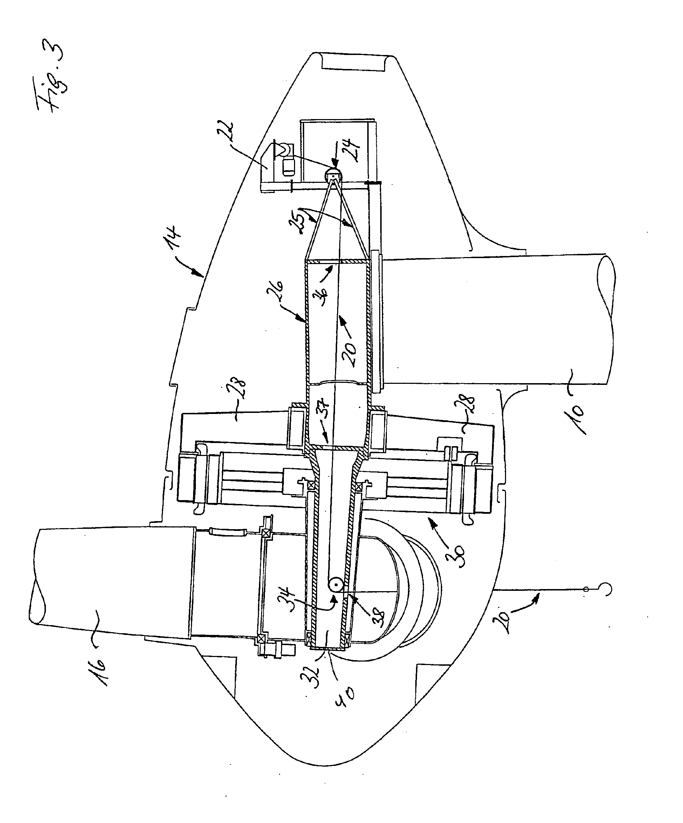

Figur 3 zeigt eine zweite Ausführungsform der Erfindung. Die Komponenten in dieser Figur sind mit den gleichen Bezugszeichen bezeichnet wie diejenigen in Figur 2. Der wesentliche Unterschied gegenüber der in Figur 2 gezeigten, ersten Ausführungsform der Erfindung besteht darin, dass hier als Zugseil 20 das Seil der ohnehin in der Windenergieanlage vorhandenen Winde 22 verwendet wird. Die Tragkraft dieser Winde ist zwar begrenzt, es können aber trotzdem Komponenten mit geringerem Gewicht z. B. durch die Rotorblatt-Öffnung in den vorderen Teil der Gondel 14 gehoben werden. Als Beispiel sei hier ein Pitchmotor genannt, also ein Motor, der der Verstellung eines Rotorblattes dient. Dieser müsste sonst in den hinteren Teil der Gondel 14 gehoben und von dort umständlich in den vorderen Teil transportiert werden. Dies setzt natürlich voraus, dass die Rotorblattöffnung offen und nicht durch ein Rotorblatt verschlossen ist.

Der Seilverlauf ist dann, wie in der Figur gut zu erkennen ist, von der Winde 22 über die erste Umlenkrolle 24, durch die zweite Seildurchführung 36, die dritte Seildurchführung 37, über die zweite Umlenkrolle 34 und durch die vierte Seildurchführung 38.

Neben dem dargestellten und beschriebenen Beispiel sei auch auf eine weitere nicht dargestellte Alternative verwiesen. Hierbei kann eine Seilführung bzw. Umlenkrolle oberhalb des Turmkopfes angeordnet werden, so dass das Seil dann lenkrolle oberhalb des Turmkopfes angeordnet werden, so dass das Seil dann in das Turminnere herabgelassen bzw. aus diesem hochgezogen werden kann. Damit können dann über das Seil auch Lasten innerhalb des Turms, insbesondere im Bereich des Turmfußes, z.B. Leistungsschränke, Transformatoren etc. bei Bedarf hochgehoben oder gesenkt werden, was vorteilhaft ist, wenn diese Teile aus dem Turmfußbereich herausgebracht werden müssen, was regelmäßig über Seitentüren im Turm geschieht, die jedoch nicht sämtlich auf Höhe der betroffenen Komponente liegen, die ausgetauscht werden soll.

Statt einer einfachen Umlenkrolle als Seil kann auch jede andere Art von Seilführung vorgesehen werden, in der das Seil durch den Maschinenträger 26 hindurch in den Turm geleitet werden kann.

Eine weitere Alternative kann auch darin bestehen, die Winde 18 selbst nicht außerhalb des Turmes, sondern innerhalb des Turmes im Bereich des Turmfußes unterzubringen. Dann liegt das Zugseil stets geschützt innerhalb der Anlage und ein Heben und Senken von Fracht ist an mehreren Stellen möglich, einmal im Bereich der hinteren Gondel (durch Umlenkrolle 24), ein weiteres Mal im Bereich der Nabe (über die Rolle 38) und das Senken von Komponenten innerhalb des Turmes ist ebenfalls möglich.

Es ist auch möglich, eine weitere Umlenkrolle (nach Art der Rolle 38) vorzusehen, die im Bereich der Nabenspitze 40 ausgebildet ist, so dass das Seil aus der Nabe der Windenergieanlage heraus an den Rotorblättern vorbeigeführt werden kann. Damit können dann Lasten vom Boden bis in den Bereich der Rotornabe hochgehoben werden, und zwar auch an den Rotorblättern vorbei. Wenn diese Last beispielsweise eine Arbeitsplattform ist, ist es möglich, das Personal direkt an den Rotorblättern außenseitig hoch und runterzufahren, um die Rotorblätter zu inspizieren oder im Bedarf Service- oder Reinigungsarbeiten vorzunehmen.

Es versteht sich von selbst, dass dort wo notwendig, weitere Seitenführungs- oder Umlenkrollen innerhalb des Maschinenträgers, des Turms, der Gondel oder der Nabe vorgesehen werden können, ohne dass dies einer besonderen Erwähnung an dieser Stelle bedarf.

Wird eine Winde eingesetzt, die sich am Fuß der Windenergieanlage befindet, so muss diese nicht zwangsläufig auch fest mit dem Fundament der Windenergieanlage verbunden sein, sondern kann auch offen ans Transportfahrzeug gelagert und mit diesem verbunden sein, so dass ein sehr flexibler Einsatz der Winde möglich ist. Auch ist es möglich, die Winde auf einem Gestell zu befestigen, so dass stets ein ausreichend großes Gegengewicht durch die Winde gewährleistet ist.

## Patentansprüche

1. Windenergieanlage mit einem Fahrzeug, welches am Fuß der Windenergieanlage angeordnet ist umfrassend
wenigstens eine Umlenkrolle (24, 34) und wenigstens eine Seildurchführung (35, 36, 37, 38) im Bereich des Turmkopfes der Windenergieanlage zum Durchführen eines Zugseiles (20) von einer Winde (18, 22), welche außerhalb des Turms am Fuß des Windenergieanlage auf dem Fahrzeug gelagert und mit diesem verbunden ist.

2. Windenergieanlage nach Anspruch 1,
**gekennzeichnet durch** eine Selldurchführung (35) in der Gondel (14) der Windenergieanlage zum Durchführen eines Zugseiles (20) von der Winde (18) am Fuß der Windenergieanlage.

3. Windenergieanlage nach Anspruch 1 oder 2,
**dadurch gekennzeichnet, dass** eine zweite Seildurchführung vorgesehen ist, welche oberhalb des Turmkopfes der Windenergieanlaga ausgebildet ist und mittels welcher Komponenten der Windenergieanlage innerhalb des Turmes hebbar oder senkbar sind.

4. Verfahren zur Montage/Demontage von Komponenten einer Windenergieanlage, mit den Schriften;
- Transport einer auf einem Transportfahrzeug gelagerten Winde (18,22), zum Fuß der Windenergieanlage,
Anordnung des Transportfahrzeugs am Fuß der Windenergieanlage,
wobei die Winde auf dem Transportfahrzeug bleibt,
- Verlegen eines Zugseiles (20) von der Winde (18, 22) zu wenigstens einer Umlenkrolle (24, 34) im Bereich des Turmkopfes und weiter zu der zu montierenden/demontierenden Komponente /17),
- Anbringen des Zugseiles an der Komponente (17) und
- Lösen und Herunterlassen bzw. Hochziehen und Befestigen der Komponente (17).

## Claims

1. A wind power installation with a vehicle placed at the foot of the wind power installation, comprising
at least one deflection roller (24, 34) and at least one cable passage (35, 36, 37, 38) in the region of the tower head of the wind power installation for passing therethrough a hauling cable (20) from a winch (18, 22) which is supported on and connected to the vehicle outside the tower at the foot of the wind power installation.

2. A wind power installation according to claim 1,
**characterised by** a cable passage (35) in the nacelle (14) of the wind power installation for passing therethrough a hauling cable (20) from a winch (18) at the foot of the wind power installation.

3. A wind power installation according to claim 1 or 2,
**characterised in that** a second cable passage is provided, which is formed above the tower head of the wind power installation and by means of which components of the wind power installation may be raised or lowered inside the tower.

4. A method for mounting/dismounting components of a wind power installation, comprising the steps of:
- transporting a winch (18, 22) supported on a transport vehicle to the foot of the wind power installation,
- placing the transport vehicle at the foot of the wind power installation, the winch remaining on the transport vehicle,
- laying a hauling cable (20) from the winch (18, 22) to at least one deflection roller (24, 34) in the region of the tower head and further to the component (17) to be mounted/dismounted,
- attaching the hauling cable (20) to the component (17), and
- detaching and letting down or pulling up and fastening the component (17).

## Revendications

1. Installation d'énergie éolienne comprenant un véhicule qui est disposé au pied de l'installation d'énergie éolienne, comprenant au moins une poulie de renvoi (24, 34) et au moins un passage pour câble (35, 36, 37. 38) dans la zone de la nacelle de l'installation d'énergie éolienne pour le passage d'un câble tracteur (20) depuis un treuil (18, 22) qui est monté à l'extérieur de la tour au pied de l'installation d'énergie éolienne sur le véhicule et qui est relié à ce dernier.

2. Installation d'énergie éolienne selon la revendication 1, **caractérisée par** un passage pour câble (35) dans la nacelle (14) de l'installation d'énergie éolienne pour le passage d'un câble tracteur (20) à partir du treuil (18) au pied de l'installation d'énergie éolienne.

3. Installation d'énergie éolienne selon la revendication 1 ou 2, **caractérisée en ce qu'**on prévoit un deuxième passage pour câble qui est réalisé au-dessus de la nacelle de l'installation d'énergie éolienne et au moyen duquel on peut élever ou abaisser des composants de l'installation d'énergie éolienne au sein de la tour.

4. Procédé pour le montage/démontage de composants d'une installation d'énergie éolienne, comprenant les étapes consistant à :
- transporter un treuil (18, 22) monté sur un véhicule de transport, jusqu'au pied de l'installation d'énergie éolienne ;
- disposer le véhicule de transport au pied de l'installation d'énergie éolienne, le treuil restant sur le véhicule de transport ;
- déplacer un câble tracteur (20) depuis le treuil (18, 22) jusqu'à au moins une poulie de renvoi (24, 34) dans la zone de la nacelle et au-delà jusqu'au composant (17) à monter/démonter ;
- amener le câble tracteur contre le composant (17) ; et
- détacher, et abaisser, respectivement soulever, et fixer le composant (17).
